# EUROPEAN PATENT APPLICATION

(11) **EP 1 908 678 A2**
(43) Date of publication of application: **09.04.2008**
(21) Application number: 07019337.0
(22) Date of filing: 02.10.2007
(51) Int. Cl.: B62K 19/38, B62K 11/04

(54) **Motorcycle**

(30) Priority: 06.10.2006 JP 2006275489
(71) Applicant: Yamaha Hatsudoki Kabushiki Kaisha, Iwata-shi, Shizuoka-ken 438-8501 (JP)
(72) Inventor: Oosumi, Masumi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a motorcycle (1) comprising: a body frame (2); an exhaust device (4) mounted on the body frame (2); a rear arm (6) swingably supported by the body frame (2) and pivotally supporting a rear wheel (5); and a hydraulic braking device (7) for applying a brake to the rear wheel (5) comprising a master cylinder (27) producing hydraulic pressure and a reservoir (28) supplying hydraulic fluid to the master cylinder (27), wherein the reservoir (28) and the master cylinder (27) are positioned along and to the rear of a rising section (18b) of the exhaust pipe (18) of the exhaust device (4).

## Description

The present invention relates to a motorcycle provided with an exhaust device mounted on a body frame, a rear arm swingably supported by the body frame, and a hydraulic braking device for applying a brake to a rear wheel. More particularly, the present invention relates to improvement of an arrangement of a master cylinder and a reservoir included in the braking device.

Conventional arrangements of the master cylinder and the reservoir in a motorcycle provided with a hydraulic braking device include the arrangement described in Patent Document 1. In the conventional arrangement, a master cylinder is attached to a footrest bracket. The footrest bracket is attached to a vertically-extending seat tube at a substantially center in the front-and-rear direction of the vehicle, and a reservoir is provided at a position above and transversely inward from the master cylinder.
Patent Document 1: JP-B-3366082

In the conventional braking device, the reservoir is transversely inwardly displaced from the master cylinder. Hence, a space necessary for the braking system increases in the transverse direction. Meanwhile, some exhaust devices, which are often referred to as an up-slanting muffler type, include an exhaust pipe disposed at a position transversely spaced from a front portion of the rear arm to rise upward and a muffler connected to a rear end of the exhaust pipe. However, when the conventional arrangement of the master cylinder and the reservoir is employed in the motorcycle having the up-slanting muffler type exhaust device, positions of the master cylinder and the reservoir, and hence a footrest step, are transversely outwardly displaced to avoid interference with the rising section of the exhaust pipe. Accordingly, there arises a concern that a riding posture of a rider may be adversely affected.

The present invention has been made in view of the above circumstances, and an object of the invention is therefore to provide a motorcycle as indicated above in which the master cylinder and the reservoir can be arranged compactly.

This objective is solved in an inventive manner by a motorcycle comprising: a body frame; an exhaust device mounted on the body frame; a rear arm swingably supported by the body frame and pivotally supporting a rear wheel; and a hydraulic braking device for applying a brake to the rear wheel comprising a master cylinder producing hydraulic pressure and a reservoir supplying hydraulic fluid to the master cylinder, wherein the reservoir and the master cylinder are positioned along and to the rear of a rising section of the exhaust pipe of the exhaust device.

Preferably, the exhaust device includes the exhaust pipe rising upward at a position transversely spaced from a front portion of the rear arm and a muffler connected to the exhaust pipe.

Further, preferably the reservoir is located above the master cylinder.

Still further, preferably the reservoir is positioned such that at least a portion of the reservoir overlaps the master cylinder in top view.

Therein, it is beneficial if the exhaust pipe is continued from the rising section to bend and extend rearward, and the reservoir is disposed at a portion at which the exhaust pipe bends.

It is further beneficial if the reservoir is positioned such that at least a portion of the reservoir overlaps the exhaust pipe in top view.

It is still further beneficial if the rising section of the exhaust pipe includes: a catalyst at a portion of the rising section of the exhaust pipe; and a protector between the reservoir and the catalyst-placed portion, the protector covering the catalyst-placed portion from an outside in a transverse direction of the motorcycle.

Preferably, the reservoir is attached to the protector.

Further, preferably the protector includes a step portion that is transversely inwardly stepped at a rearward position from the rising section of the exhaust pipe, and the reservoir is disposed transversely outside of the step portion.

Still further, preferably the reservoir is attached to the protector by a fastening member from a rear side toward a front side of the motorcycle.

Yet further still, preferably the fastening member is inserted from an obliquely rear side such that an axis of the fastening member is transversely positioned increasingly outward toward the rear of the motorcycle.

Therein, it is beneficial if the reservoir has a lid member for opening and closing an upper end opening of the reservoir, and a portion of the protector is in the vicinity of an upper portion of the reservoir.

Further, it is beneficial if the protector is divided into an upper protector and a lower protector, and the reservoir is attached to the lower protector such that a lower edge of the upper protector is in the vicinity of the upper portion of the lid member of the reservoir.

Beneficially, as viewed from a side of the motorcycle, the reservoir is disposed in a space between a portion of the upper protector and the rear wheel at a forward position from a front edge of the rear wheel.

Further, beneficially a footrest bracket for supporting a footrest step, on which a rider's foot is to be placed, is attached to the body frame; a heel guard, with which the rider's footwear comes into contact, is attached to the footrest bracket; and the master cylinder and a hose member for connecting the master cylinder and the reservoir are disposed at a position transversely inward from the heel guard.

In the following, the present invention is explained in greater detail with respect to several embodiments thereof in conjunction with the accompanying drawings, wherein:
- FIG. 1: is a right side view of a motorcycle according to an embodiment,
- FIG. 2: is a right side view of an arrangement of a master cylinder and a reservoir according to the embodiment,
- FIG. 3: is a plan view showing a positional relationship between a rising section of an exhaust pipe and a protector, and a rear arm according to the embodiment,
- FIG. 4: is a cross-sectional view taken along the line IV-IV in FIG. 2,
- FIG. 5: is a cross-sectional diagram as viewed from a direction indicated by arrow V in FIG. 2,
- FIG. 6: is a cross-sectional view taken the along line VI-VI in FIG. 2,
- FIG. 7: is a cross-sectional view taken along the line VII-VII in FIG. 2,
- FIG. 8: is a cross-sectional view taken along the line VIII-VIII in FIG. 2,
- FIG. 9: is a cross-sectional view taken along the line IX-IX in FIG. 2,
- FIG. 10: is a cross-sectional view taken along the line X-X in FIG. 2, and
- FIG. 11: is a cross-sectional view taken along the line XI-XI in FIG. 2.

### Description of Reference Numerals and Symbols:

1: motorcycle
2: body frame
4: exhaust device
5: rear wheel
5a: front edge of rear wheel
6: rear arm
7: braking device
18: exhaust pipe
18b': rising section
19: muffler
20b: downstream catalyst
21: protector
22: upper protector
22g: lower edge (a portion of protector)
23: lower protector
23g: step portion
28b: cap (lid member)
24: footrest bracket
25: footrest step
26: heel guard
27: master cylinder
28: reservoir
32a: reservoir hose (hose member)
33: bolt (fastening member)
a: axis of fastening member
b: space between a portion of protector and rear wheel
c: bent portion of exhaust pipe
d: portion where reservoir and master cylinder overlap each other
e: portion where reservoir and exhaust pipe overlap each other

Embodiments of the present teaching will be described hereinafter with reference to the accompanying drawings.

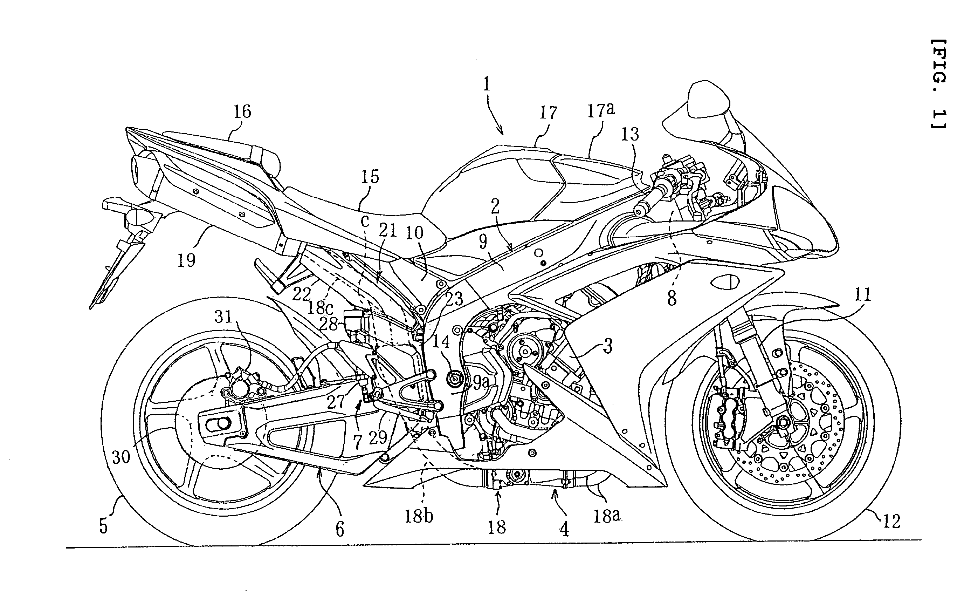

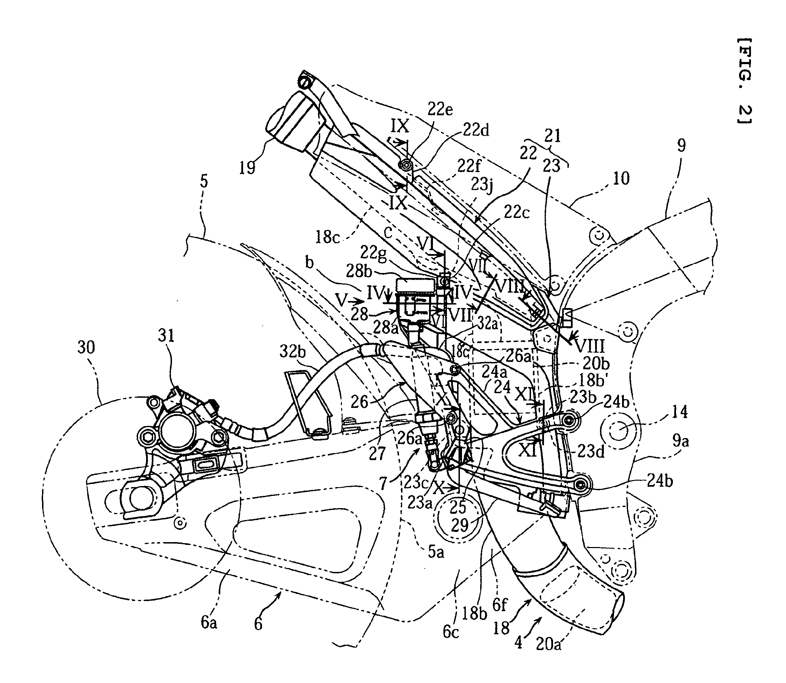

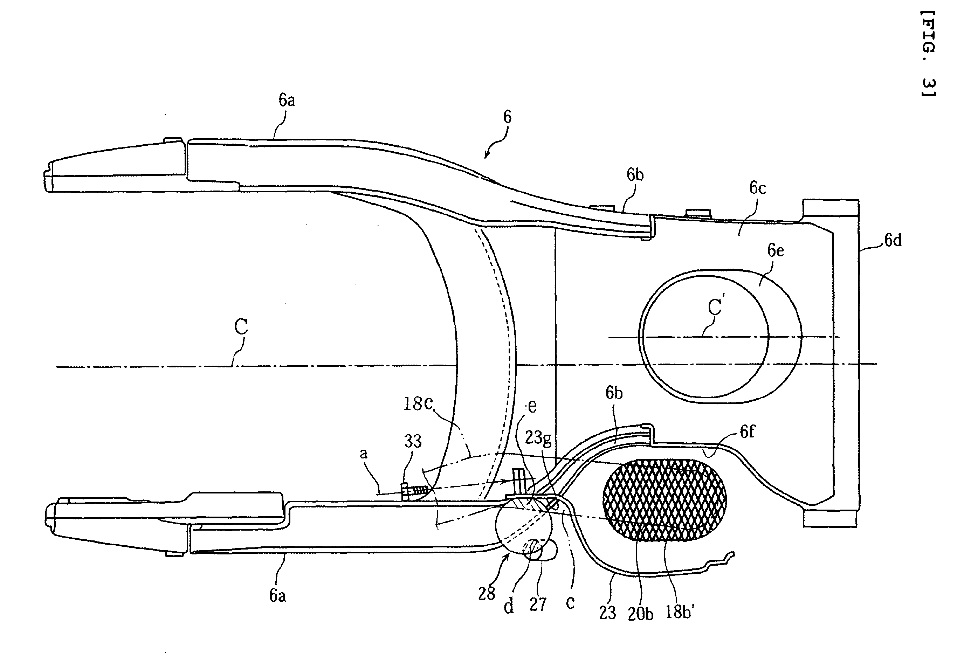

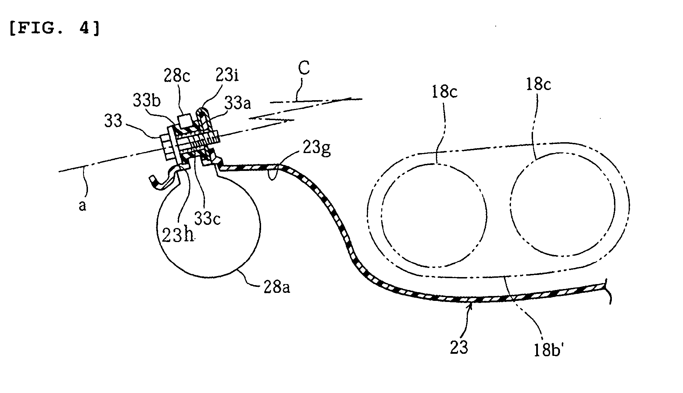

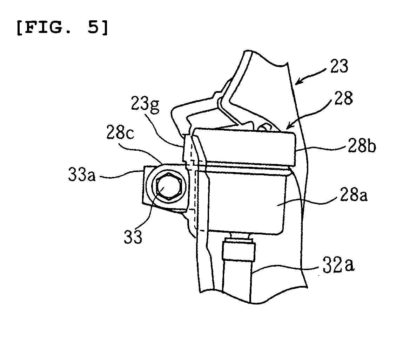

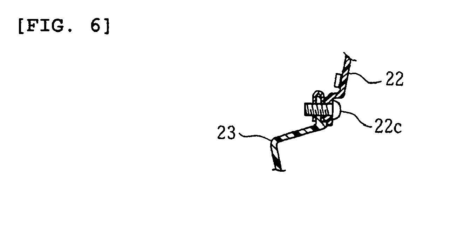

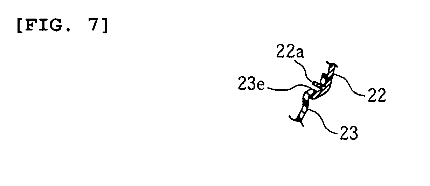

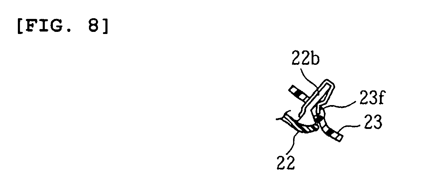

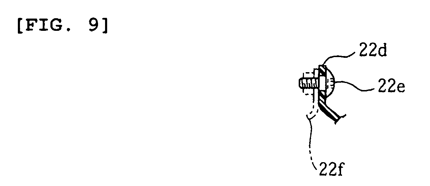

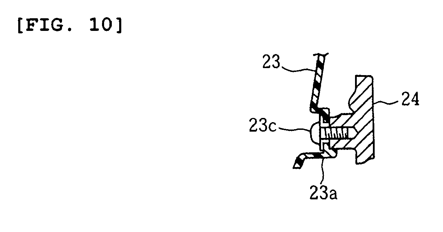

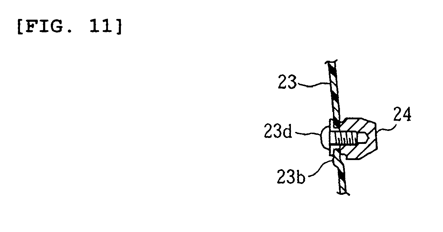

FIGs. 1 to 11 are diagrams for explaining a motorcycle according to an embodiment of the teaching. The front and rear, and left and right directions in the embodiment are the front and rear, and left and right directions as viewed from a seated rider, respectively.

In the drawings, reference numeral 1 denotes a motorcycle. The motorcycle 1 includes a body frame 2, an engine 3 mounted on the body frame 2, an exhaust device 4 connected to the engine 3 and supported by the body frame 2, a rear arm 6 swingably supported by the body frame 2 and pivotally supporting a rear wheel 5, and a hydraulic braking device 7 for applying a brake to the rear wheel 5.

The body frame 2 has a head pipe 8 at a front end of the body frame 2, a left and a right main frames 9 that extend from the head pipe 8 obliquely downward in the rearward direction, while being increasingly transversely spaced from each other toward the rear of the vehicle, a left and a right rear arm brackets 9a continued from the left and right main frames 9 to extend in a downwardly curved manner, and a seat frame 10 that is attached to the downwardly curved portions of the main frames 9 and extends obliquely upward in the rearward direction.

A front fork 11 is pivotally supported by the head pipe 8 for steering to the left and right. A front wheel 12 is pivotally supported by a lower end of the front fork 11. A pair of steering handlebars 13 are fixed to an upper end of the front fork 11.

A front end of the rear arm 6 is supported to be vertically swingable by a lower portion of the rear arm bracket 9a via a pivot shaft 14. The rear wheel 5 is pivotally supported by a rear end of the rear arm 6.

The rear arm 6 has a pair of left and right arm bodies 6a, 6a, a coupler 6c for coupling front portions 6b, 6b of the left and right arm bodies 6a, 6a together, and a pivot pipe 6d connected to a front end of the coupler 6c. The pivot pipe 6d is supported by the pivot shaft 14 via a bearing.

A through hole 6e, through which a rear cushion unit (not shown) is to be inserted, is defined in the coupler 6c. A center line C' of the through hole 6e is deviated slightly in a transverse direction (leftward) from a vehicle center line C. A recess 6f is defined in a right wall of the coupler 6c, that is, in a wall on the side opposite from the deviating direction of the through hole 6e to be transversely inwardly concaved.

A straddle-type main seat 15 and a straddle-type tandem seat 16, which is disposed to the rear of the main seat 15, are mounted on the seat frame 10. A fuel tank 17 and an air cleaner (not shown) are provided in front of the main seat 15. The air cleaner is covered with a tank cover 17a.

The engine 3 is a water-cooled, four-cycle, parallel four-cylinder engine, and suspended by the left and right main frames 9 and the rear arm brackets 9a.

The exhaust device 4 is connected to the engine 3. The exhaust device 4 includes four exhaust pipes 18 each connected to the engine 3, and a pair of left and right mufflers 19, 19 each connected to a rear end of a corresponding one of the exhaust pipes 18. The exhaust pipe 18 includes four exhaust branch pipes 18a each connected to an exhaust port opened in a front wall of a cylinder head of the engine 3, a joint pipe 18b, and a pair of a right branch pipe 18c and a left branch pipe 18c'. The exhaust branch pipes 18a are joined together by the joint pipe 18b, and then branched again into the right and left branch pipes 18c and 18c'.

The joint pipe 18b has a rising section 18b' that rises substantially vertically from the proximity to below a rear end of the engine 3 to pass through a space to the rear of one of the rear arm brackets 9a. The rising section 18b' is positioned to be transversely spaced from a front portion of the rear arm 6, partially positioned inside the recess 6f that is defined in the front portion of the rear arm 6. An upstream catalyst 20a is housed in an upstream section (lower portion) of the joint pipe 18b, and a downstream catalyst 20b is housed in a downstream section (the rising section 18b') of the joint pipe 18b.

The right branch pipe 18c rises upward for a small distance from a downstream end (upper end) of the joint pipe 18b, and then bends rearward to extend obliquely upward in the rearward direction. A right muffler 19 is connected to a rear end of the right branch pipe 18c. On the other hand, the left branch pipe 18c' extends transversely leftward, while extending obliquely upward in the rearward direction. A left muffler 19 is connected to a rear end of the left branch pipe 18c'. The left and right mufflers 19, 19 are disposed in proximities to the left and right sides of a lower surface of a tandem seat 16, respectively.

The rising section 18b' of the exhaust pipe 18 and the right branch pipe 18c are covered with a protector 21 from transversely outside. The protector 21 is divided into an upper protector 22 and a lower protector 23, and removably attached to the body frame. The upper protector 22 extends in the front-and-rear direction of the vehicle along the right branch pipe 18c to cover the right branch pipe 18c. The lower protector 23 extends vertically along the rising section 18b' to cover the rising section 18b'.

A bifurcated footrest bracket 24 is bolted and fixed to the lower portion of the rear arm bracket 9a with bolts 24b, 24b. A footrest step 25, on which a rider's foot is to be placed, is attached to a rear end of the footrest bracket 24. A guard support 24a is formed integrally with the footrest bracket 24 on its upper rear end. A heel guard 26, with which the rider's footwear comes into contact, is bolted and fixed to the guard support 24a with bolts 26a, 26a.

A rear edge 23a and a front rear edge 23b of a lower portion of the lower protector 23 are bolted to an inner face of the footrest bracket 24 with bolts 23c, 23d, respectively. Hence, the lower protector 23 is attached to the body frame 2 via the footrest bracket 24.

A lower edge 22g of the upper protector 22 overlaps an upper edge 23j of the lower protector 23 from outside. Engaging pawls 22a, 22b formed on an inner surface of the lower edge 22g of the upper protector 22 are lockingly inserted into engaging holes 23e, 23f, respectively, defined in the upper edge 23j of the lower protector 23 and fastened with a bolt 22c. A flange 22d formed on an upper edge of the upper protector 22 is fastened and fixed to the seat frame 10 with a bolt 22e via a stay 22f. Hence, the upper protector 22 is attached to the body frame 22.

The braking device 7 includes a master cylinder 27 for producing hydraulic pressure, a reservoir 28 for supplying hydraulic fluid to the master cylinder 27, a brake pedal 29 pivotally supported by the footrest bracket 24, a brake disc 30 attached to the rear wheel 5, and a brake caliper 31 attached to the brake disc 30.

A bottom wall of the reservoir 28 is in communication with an axial center of a sidewall of the master cylinder 27 through a reservoir hose (hose member) 32a. An upper-end outlet of the master cylinder 27 is in communication with the brake caliper 31 through a hydraulic hose 32b. The reservoir hose 32a extends from the bottom of the reservoir 28 to bend forward, and then bend toward a front wall of the master cylinder 27. The master cylinder 27 and the reservoir hose 32a are positioned transversely inward from the heel guard 26.

The reservoir 28 and the master cylinder 27 are positioned along and to the rear of the rising section 18b' of the exhaust pipe. The master cylinder 27 is bolted and fixed to a rear edge of the guard support 24a of the footrest bracket 24.

The reservoir 28 is positioned above the master cylinder 27 such that the reservoir 28 overlaps the master cylinder 27 at a portion "d" in top view. The reservoir 28 is disposed at a rearward bent portion "c" of the right branch pipe 18c such that the reservoir 28 overlaps the branch pipe 18c at a portion "e" in top view.

The reservoir 28 is attached to the lower protector 23. Details of its attachment structure will be described below. The lower protector 23 has a step portion 23g, which is transversely inwardly stepped, at a rearward position from the rising section 18b' of the exhaust pipe. The reservoir 28 is disposed transversely outside of the step portion 23g. The reservoir 28 has a cup-like reservoir body 28a and a cap (lid member) 28b for opening and closing an upper end opening of the reservoir body 28a. A flange 28c is formed integrally with a side surface of the body 28a. The flange 28c protrudes transversely inward through an attachment hole 23h defined in the step portion 23g. A support flange 23i that protrudes transversely inward is formed on the step portion 23g of the lower protector 23. A U-shaped nut 33a made of a sheet metal is fit into the support flange 23i. A bolt (fastening member) 33 is screwed into the nut 33a, thereby fixing the flange 28c to the support flange 23i. Reference numeral 33b denotes a damper made of an elastic material, and 33c denotes a metal collar that regulates a compression distance of the damper 33b.

The bolt 33 is inserted from the front side to the rear side of the vehicle. More specifically, the bolt 33 is inserted from an obliquely rear side such that an axis "a" of the bolt 33 is transversely positioned increasingly outward toward the rear of the vehicle.

The lower edge 22g of the upper protector 22 is in the vicinity of an upper surface of the cap 28b of the reservoir 28. As viewed from a side of the vehicle, the reservoir 28 is disposed in a space "b" between the lower edge 22g of the upper protector 22 and the rear wheel 5 at a forward position from a front edge 5a of the rear wheel 5.

According to the embodiment, the master cylinder 27 is positioned to the rear of the rising section 18b' of the exhaust pipe and approximately parallel with the rising section 18b', and the reservoir 28 is positioned above the master cylinder 27, while partially overlapping therewith in top view. Accordingly, the master cylinder 27 and the reservoir 28 can be arranged compactly to reduce a necessary space therefor in the transverse direction, thereby avoiding an increase in transverse clearance for the footrest step 25, and hence an adverse effect which may otherwise be exerted on a riding posture of a rider. In addition, the distance between the master cylinder 27 and the reservoir 28 is reduced, which favorably reduces a required length of the reservoir hose 32a.

The downstream catalyst 20b is disposed within the rising section 18b' of the exhaust pipe, and the lower protector 23 is provided between the catalyst-placed portion and the reservoir 28. This can inhibit heat emitted from the catalyst which can have a high temperature from being transmitted to the reservoir.

The step portion 23g, which is transversely inwardly stepped, at the rearward position from the rising section 18b' of the exhaust pipe is formed on the lower protector 23, and the reservoir 28 is disposed transversely outside of the step portion 23g. This arrangement allows to prevent the reservoir 28 and the master cylinder 27 from protruding transversely outward. Thus, also in this regard, the footrest step 25 is prevented from being outwardly positioned, and hence the adverse effect on the riding posture of the rider can be avoided.

For attachment of the reservoir 28, the flange 28c of the reservoir 28 is directly bolted and fastened to the flange 23i of the lower protector 23. Thus, as compared with a conventional technique of attaching the reservoir via a bracket made of a sheet metal, reduction in the number of parts and weight is attained.

In addition, because the reservoir 28 is attached to the lower protector 23 with the bolt 33 inserted from the rear to the front of the vehicle, a space required for the reservoir 28 can be minimized in the front-and-rear direction. Meanwhile, when there is employed such an arrangement in which the bolt is to be transversely inserted, the flange provided for bolting with the bolt will protrude rearward or forward of the reservoir 28. As a result, the space required for the reservoir 28 is undesirably increased in the front-and-rear direction by the distance of the protrusion.

The thus-attained reduction in the required space allows the reservoir 28 to be disposed in a space between the lower edge 22g of the upper protector 22 and the rear wheel 5 at a forward position from the front edge 5a of the rear wheel 5 as viewed from laterally outside of the vehicle. Hence, the master cylinder 27 and the reservoir 28 can be disposed close to the center of the mass of the vehicle, thereby contributing to concentration of the mass.

When there is employed such an arrangement in which the bolt is to be inserted from the rear side of the vehicle, a tool is likely to interfere with the rear wheel during assembly, which can deteriorate workability. However, in the embodiment, the bolt 33 is inserted from the obliquely rear side such that the axis "a" of the bolt 33 is transversely positioned increasingly outward toward the rear of the vehicle. This allows to avoid causing the interference problem, thereby ensuring workability.

In addition, because the lower edge 22g of the upper protector 22 is in the vicinity of an upper portion of the cap 28b of the reservoir 28, the cap 28b interferes with the lower edge 22g in the course of removing the cap 28b, which makes it impossible to remove the cap 28b in the as-is status. Hence, the cap 28b is protected from being removed for tampering.

Furthermore, dividing the protector 21 into the upper protector 22 and the lower protector 23 allows to simplify a die assembly construction for the protector 21, as compared with that for a protector being an integrated unit of the protectors, and to increase the degree of freedom allowed for design.

Locating the master cylinder 27 and the reservoir hose 32a for connecting the master cylinder 27 to the reservoir 28 transversely inward from the heel guard 26 attached to the footrest bracket 24 allows to protect these components from coming into contact with the rider's footwear.

The description above discloses (amongst others) an embodiment of a motorcycle including: a body frame; an exhaust device mounted on the body frame; a rear arm swingably supported by the body frame and pivotally supporting a rear wheel; and a hydraulic braking device for applying a brake to the rear wheel. The exhaust device includes an exhaust pipe rising upward at a position transversely spaced from a front portion of the rear arm, and a muffler connected to the exhaust pipe. The braking device includes a master cylinder that produces hydraulic pressure and a reservoir that is located above the master cylinder and that supplies hydraulic fluid to the master cylinder. The reservoir and the master cylinder are positioned along and to the rear of a rising section of the exhaust pipe.

According to the motorcycle of this embodiment, the reservoir and the master cylinder are positioned along and to the rear of a rising section of the exhaust pipe. This allows the motorcycle, which includes an up-muffler type exhaust device, to reduce a space necessary for the master cylinder and the reservoir in the transverse direction, thereby preventing the footrest step from being extended, and hence avoiding causing a rider to take a poor riding posture.

Likewise, the description above discloses, in order to provide a motorcycle in which a master cylinder and a reservoir can be arranged compactly, that a reservoir 28 and a master cylinder 27 are positioned along and to the rear of a rising section 18b' of an exhaust pipe.

The description further discloses, according to a preferred first aspect, a motorcycle comprising: a body frame; an exhaust device mounted on the body frame; a rear arm swingably supported by the body frame and pivotally supporting a rear wheel; and a hydraulic braking device for applying a brake to the rear wheel, wherein the exhaust device includes an exhaust pipe rising upward at a position transversely spaced from a front portion of the rear arm, and a muffler connected to the exhaust pipe, the braking device includes a master cylinder that produces hydraulic pressure and a reservoir that is located above the master cylinder and that supplies hydraulic fluid to the master cylinder, and the reservoir and the master cylinder are positioned along and to the rear of a rising section of the exhaust pipe.

Further, according to a preferred second aspect, the reservoir is positioned such that at least a portion of the reservoir overlaps the master cylinder in top view.

Further, according to a preferred third aspect, the exhaust pipe is continued from the rising section to bend and extend rearward; and the reservoir is disposed at a portion at which the exhaust pipe bends.

Further, according to a preferred fourth aspect, the reservoir is positioned such that at least a portion of the reservoir overlaps the exhaust pipe in top view.

Further, according to a preferred fifth aspect, the rising section of the exhaust pipe includes: a catalyst at a portion of the rising section of the exhaust pipe; and a protector between the reservoir and the catalyst-placed portion, the protector covering the catalyst-placed portion from an outside in a transverse direction of the motorcycle.

Further, according to a preferred sixth aspect, the reservoir is attached to the protector.

Further, according to a preferred seventh aspect, the protector includes a step portion that is transversely inwardly stepped at a rearward position from the rising section of the exhaust pipe; and the reservoir is disposed transversely outside of the step portion.

Further, according to a preferred eighth aspect, the reservoir is attached to the protector by a fastening member from a rear side toward a front side of the motorcycle.

Further, according to a preferred ninth aspect, the fastening member is inserted from an obliquely rear side such that an axis of the fastening member is transversely positioned increasingly outward toward the rear of the motorcycle.

Further, according to a preferred tenth aspect, the reservoir has a lid member for opening and closing an upper end opening of the reservoir; and a portion of the protector is in the vicinity of an upper portion of the reservoir.

Further, according to a preferred eleventh aspect, the protector is divided into an upper protector and a lower protector, and the reservoir is attached to the lower protector such that a lower edge of the upper protector is in the vicinity of the upper portion of the lid member of the reservoir.

Further, according to a preferred twelfth aspect, as viewed from a side of the motorcycle, the reservoir is disposed in a space between a portion of the upper protector and the rear wheel at a forward position from a front edge of the rear wheel.

Further, according to a preferred thirteenth aspect, a footrest bracket for supporting a footrest step, on which a rider's foot is to be placed, is attached to the body frame; a heel guard, with which the rider's footwear comes into contact, is attached to the footrest bracket; and the master cylinder and a hose member for connecting the master cylinder and the reservoir are disposed at a position transversely inward from the heel guard.

## Claims

1. Motorcycle (1) comprising:
a body frame (2);
an exhaust device (4) mounted on the body frame (2);
a rear arm (6) swingably supported by the body frame (2) and pivotally supporting a rear wheel (5); and
a hydraulic braking device (7) for applying a brake to the rear wheel (5) comprising a master cylinder (27) producing hydraulic pressure and a reservoir (28) supplying hydraulic fluid to the master cylinder (27),
**characterized in that**
the reservoir (28) and the master cylinder (27) are positioned along and to the rear of a rising section (18b') of the exhaust pipe (18) of the exhaust device (4).

2. Motorcycle according to claim 1, **characterized in that** the exhaust device (4) includes the exhaust pipe (18) rising upward at a position transversely spaced from a front portion of the rear arm (6) and a muffler (19) connected to the exhaust pipe (18).

3. Motorcycle according to claim 1 or 2, **characterized in that** the reservoir (28) is located above the master cylinder (27).

4. Motorcycle according to one of the claims 1 to 3, **characterized in that** the reservoir (28) is positioned such that at least a portion of the reservoir (28) overlaps the master cylinder (27) in top view.

5. Motorcycle according to one of the claims 1 to 4, **characterized in that** the exhaust pipe (18) is continued from the rising section (18b') to bend and extend rearward, and the reservoir (28) is disposed at a portion at which the exhaust pipe (18) bends.

6. Motorcycle according to claim 5, **characterized in that** the reservoir (28) is positioned such that at least a portion of the reservoir (28) overlaps the exhaust pipe (27) in top view.

7. Motorcycle according to one of the claims 1 to 6, **characterized in that** the rising section (18b') of the exhaust pipe (18) includes: a catalyst at a portion of the rising section (18b') of the exhaust pipe (18); and a protector between the reservoir and the catalyst-placed portion, the protector covering the catalyst-placed portion from an outside in a transverse direction of the motorcycle.

8. Motorcycle according to claim 7, **characterized in that** the reservoir (28) is attached to the protector.

9. Motorcycle according to claim 7 or 8, **characterized in that** the protector includes a step portion that is transversely inwardly stepped at a rearward position from the rising section (18b') of the exhaust pipe (18), and the reservoir (28) is disposed transversely outside of the step portion.

10. Motorcycle according to one of the claims 7 to 9, **characterized in that** the reservoir (28) is attached to the protector by a fastening member from a rear side toward a front side of the motorcycle.

11. Motorcycle according to claim 10, **characterized in that** the fastening member is inserted from an obliquely rear side such that an axis of the fastening member is transversely positioned increasingly outward toward the rear of the motorcycle.

12. Motorcycle according to one of the claims 7 to 11, **characterized in that** the reservoir (28) has a lid member for opening and closing an upper end opening of the reservoir (28), and a portion of the protector is in the vicinity of an upper portion of the reservoir (28).

13. Motorcycle according to claim 12, **characterized in that** the protector is divided into an upper protector and a lower protector, and the reservoir (28) is attached to the lower protector such that a lower edge of the upper protector is in the vicinity of the upper portion of the lid member of the reservoir (28).

14. Motorcycle according to claim 12 or 13, **characterized in that** as viewed from a side of the motorcycle, the reservoir (28) is disposed in a space between a portion of the upper protector and the rear wheel at a forward position from a front edge of the rear wheel.

15. Motorcycle according to one of the claims 1 to 14, **characterized in that** a footrest bracket for supporting a footrest step, on which a rider's foot is to be placed, is attached to the body frame; a heel guard, with which the rider's footwear comes into contact, is attached to the footrest bracket; and the master cylinder and a hose member for connecting the master cylinder and the reservoir are disposed at a position transversely inward from the heel guard.
